(19) Europäisches Patentamt

European Patent Office

Office européen des brevets

(11) **EP 1 089 457 A2**

(12) **EUROPEAN PATENT APPLICATION**

(43) Date of publication:
**04.04.2001 Bulletin 2001/14**

(51) Int Cl.⁷: $H04B\ 7/005$

(21) Application number: **00402588.8**

(22) Date of filing: **19.09.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **28.09.1999 IT MI992009**

(71) Applicant: **ALCATEL**
**75008 Paris (FR)**

(72) Inventors:
 • **Frigerio, Marco**
  **20059 Vimercate (Milano) (IT)**

 • **Spalvieri, Arnaldo**
  **20100 Milano (IT)**
 • **Valtolina, Roberto**
  **20056 Trezzo sull'Adda (IT)**

(74) Representative: **Colombo, Stefano Paolo et al**
 **Alcatel,**
 **Intellectual Property Department, Vimercate**
 **Via Trento, 30**
 **20059 Vimercate (MI) (IT)**

(54) **Data-aided and phase-independent adaptive equalization for data transmission systems**

(57)    A method and an equalizer is described for the adaptive equalization in a real- or complex- data transmission system, characterized by operating independently of the phase of the signal at the input of the equalizer but dependently of decided data. The equalizer comprises a FIR filter whose coefficients vary with time according to a determined cost function (J) given by

$$J = E\left\{ \left| \left| y(kT) \right|^p - \left| \hat{a}_k \right|^p \right|^q \right\},$$

where $E\{\cdot\}$ indicates the averaging operation in relation to the symbols. In the event of combination of two or more signals in space diversity, the method allows for the coherent demodulation downstream of the equalizers.

**Fig. 2**

**Description**

The present invention relates to the adaptive equalization in data transmission systems. In particular, it concerns a "data-aided" adaptive equalization method for a data transmission system, an equalizer and a receiver employing such a method and a data transmission system including one or more of such equalizers.

As it is known, the adaptive equalization is a technique which is currently used to compensate the time-variable distorting effect of a channel in a generic transmission system. In some circumstances it is required that the tap control algorithm of such equalizer is independent of the signal phase at the input of the equalizer itself. This occurs for instance: when the carrier recovery circuits are placed downstream of the equalizer and, as a result, the signal to be equalized has not been coherently demodulated; or when one wishes to realize the coherent demodulation, upstream of the equalizers, of two or more space diversity signals modulated by the same carrier; or when one wishes to realize the coherent demodulation, downstream of the equalizers, of two or more space diversity signals modulated by the same carrier.

In a conventional data transmission arrangement, the information that one wishes to transmit in passing through the "information channel" is delayed, attenuated and sometimes distorted. The receiver has somehow to remove these attenuations and distortions in order to provide the intelligibility of the received signal. Moreover, some transmission means are time-varying and for this reason it is necessary for these equalization methods to be adaptive in order to follow the possible variations of the channel itself with time.

There are several and various methods, algorithms and circuits allowing for the realization of such adaptive equalization; one of these consists in filtering the signal by means of a generic FIR filter whose coefficients vary with time according to a well determined cost law or function. There are two classes of cost functions depending on whether decided data are used or not; in the first case the process is called data-aided or decision-directed (DD) equalization, in the second case the process is called blind equalization. The DD equalization allows the achievement of better performances, in terms of mean square error (MSE) at the decision device, than the blind equalization, but it has the disadvantage of operating only in the case where the estimated data are very reliable and hence with low-distorting or already partially equalized channels. The blind-type techniques, on the other hand, still being intrinsically more noisy, allow the channel equalization also in the presence of high distortion just because they are not based upon the decided data.

In literature, a class of blind algorithms independent of the signal phase (D. Godard algorithms, see the publication "Self-Recovering Equalization and Carrier Tracking in Two-Dimensional Data Communication Systems", IEEE Transactions on Communications, vol. COM-28, n. 11, November 1980, pp. 1867 to 1875) is described, such algorithms being based on the following cost function:

$$ J = E\left\{ \left( \left| y(kT) \right|^{p} - R_{p} \right)^{2} \right\} \qquad (1) $$

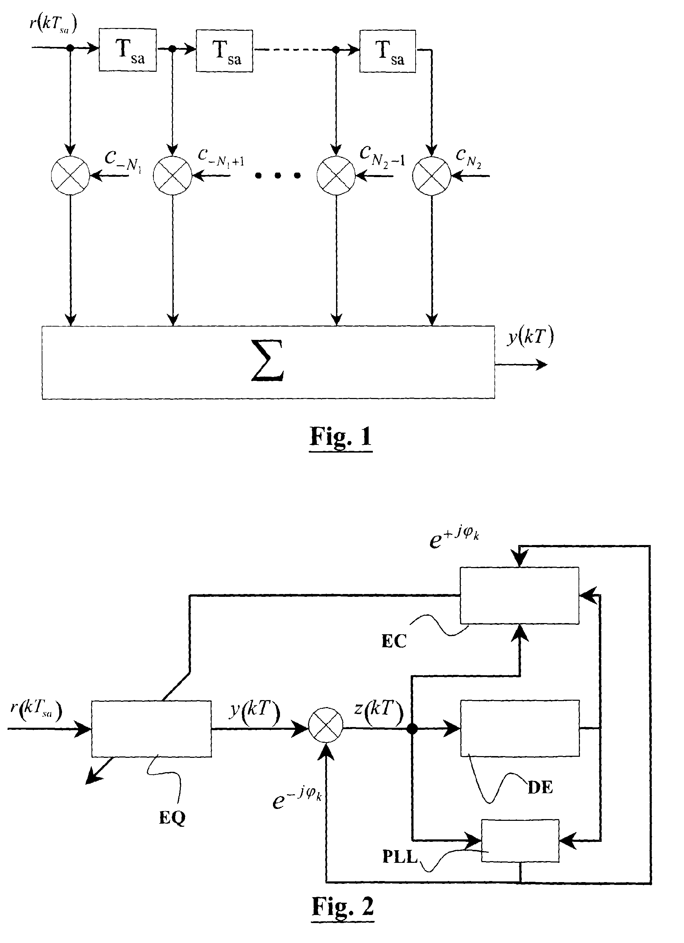

where $E\{\cdot\}$ indicates the averaging operation with respect to the symbols, $y(kT)$ represents the output of the adaptive equalizer for $t = kT$ (see Fig. 1 in this connection); $R_{P} > 0$ is a constant that represents a sort of barycenter of the transmitted signal constellation, dependent on the choice of the parameter $p$ (integer which is greater than or equal to one); and T is the symbol time or signalling interval. The family of blind algorithms proposed by Godard is a generalization of Sato's approach, that results in being a special case of (1) when $p = 1$. While for $p > 2$ the hardware complexity would become too high, the choice $p = 2$ leads to a simple and easy to implement algorithm.

A generalization of the Godard's algorithm is the so-called Constant Modulus Algorithm or CMA. The CMA, in turn, has been extended to a class of algorithms defined by the following cost function:

$$ J = E\left\{ \left| \left| y(kT) \right|^{p} - \left| \delta_{p} \right|^{p} \right|^{q} \right\} \qquad (2) $$

(where, as usual, $E\{\cdot\}$ denotes the averaging operation with respect to the symbols and $y(kT)$ represents the output of the adaptive equalizer for $t = kT$) and called CMA $p$-$q$, where $p$ e $q$ are positive integers and $\delta_{p} > 0$. It is immediately found out that the Godard's algorithm family is obtainable as a special case of equation when $q = 2$ and that the Godard's algorithm with $p = 2$ does correspond to the CMA 2-2 case.

A great advantage of these algorithms is the possibility of being able to make the equalizer coefficients converge, in the absence of thermal noise, to those of an ideal equalizer, i.e. to realize a Nyquist pulse, also when the decided data are unreliable, just because, as may be seen from the cost function equations, they are independent of the data estimation. On the other hand, the price to be paid is the noiseness of the stochastic estimation: therefore it is common practice, once the equalizer taps have reached the convergence, to charge the algorithm for updating the taps themselves and adopt one that utilizes the decided data. For instance, an experimental study is known in which there is shown the convergence of the CMA 2-2 algorithm and the subsequent passage to the minimum mean squared error (MMSE) algorithm based on the following cost function:

$$J = E\left\{ \left| y(kT) - \hat{a}_k \right|^2 \right\} \qquad (3)$$

where $E\{\cdot\}$ denotes the averaging operation with respect to the symbols, $y(kT)$ represents the equalizer output for $t = KT$ and $\hat{a}_k$ is the datum which is estimated by the decision device.

The MMSE algorithm is much less noisy than the CMA algorithm and, as a result, it is capable of providing higher signal-to-noise ratio values to the decision device. However, a serious drawback is that the function (3) depends on the carrier phase. This means that, by way of and example only, when the carrier recovery circuits are placed downstream of the equalizer, and therefore that the signal to be equalized is demodulated in a non-coherent way, in updating the taps it is necessary to take into account the introduced phase rotation and, consequently it is necessary to re-modulate the signal which serves for updating the taps.

In view of the prior art drawbacks, the main object of the present invention is to provide an algorithm for updating the taps of one or more equalizers in a manner which is independent of the phase of the signals at their inputs. This and further objects are achieved by a method according to claim 1, an equalizer according to claim 9, a receiver according to claim 14 and a transmission system according to claim 15; further characteristics of the invention are set forth in the respective dependent claims. All the claims are held to be an integral part of the present description.

In practice, the invention combines the advantages of a "decision-directed" technique with the independence from the signal phase which is in the CMA algorithms.

The invention will certainly be clear after reading the following detailed description, given by way of a mere exemplifying and non limiting example and to be read with reference to the attached figures wherein:

- Fig. 1 is a block diagram of a FIR filter;
- Fig. 2 is a block diagram of a receiver with carrier recovery placed downstream of the adaptive equalizer;
- Fig. 3 is a block diagram of a space diversity receiver with carrier recovery placed upstream of the equalizers;
- Fig. 4 is a block diagram of a space diversity receiver with carrier recovery placed downstream of the adder node; and
- Fig. 5 is a known block diagram of a space diversity receiver with carrier recovery placed downstream of the equalizers but upstream of the adder node.

As said above, referring at first to Figs. 1 and 2, the basic idea of the present invention is then to combine the advantages of a "decision-directed" technique with the independence from the signal phase which is present in the CMA algorithms: thus, an algorithm has achieved which is a phase independent decision directed algorithm (PIDDA) based on data but independent of the phase, having the following cost function:

$$J = E\left\{ \left| \left| y(kT) \right|^p - \left| \hat{a}_k \right|^p \right|^q \right\} \qquad (4)$$

where $E\{\cdot\}$ denotes the averaging operation with respect to the symbols, $y(kT)$ represents the output of the equalizer (EQ) for $t = kT$, $\hat{a}_k$ is the datum which is estimated by the decision device (DE) and finally $(p,q)$ is a pair of positive integers different from zero. For description completeness' sake, PLL denotes a phase-locked loop and EC denotes error calculation means.

Let us assume a sampling period $T_{sa}$ submultiple for the signalling interval $T$, namely $T_S = T/n$, $n$ being an integer greater or equal to one. Let then (Fig. 1)

$$r(kT_{sa}) = r(t = kT_{sa}) \qquad (5)$$

denote the *k-th* sample of the signal at the input of the equalizer (EQ).

Denoting the *i-th* complex coefficient of the equalizer (EQ) by $c_i$, with $i \in [- N_1, N_2]$, the output of the equalizer at the instant $t = kT$ is (Fig. 1)

$$y(kT) = \sum_{i=-N_1}^{N_2} c_i r(kT - iT_{sa}) \qquad (6)$$

The sample $y(kT)$ is applied to a decision device (DE) which provides the decided symbol $\hat{a}_k$.

The equalizer is adapted on the basis of the minimization of the cost function (4), subject matter of the invention. The optimum configuration of the coefficients can be derived according to the stochastic gradient algorithm; for the *i-th* tap the following applies:

$$c_i((k + 1) \cdot T) = c_i(kT) - \gamma \cdot \varepsilon(kT) \cdot r^*(kT - iT_{sa}) \qquad \text{with } i \in [- N_1, N_2] \qquad (7)$$

where * denotes the complex conjugate operation, $\gamma > 0$ is the *step-size,* and $\varepsilon(kT)$, for the cost function *J* under consideration, is:

$$\varepsilon(kT) = \mathrm{sign}\left[\left(|y_k|^p - |\hat{a}_k|^p\right)^q\right] \cdot \left(|y_k|^p - |\hat{a}_k{}^p|\right)^{q-1} \cdot |y_k|^{p-2} \cdot y_k \qquad (8)$$

with $y_k = y(kT)$.

In order to show the convenience of the algorithm according to the invention, the case where *p*=2 and *q*=1 is now considered by way of example. Equation (8) thus becomes:

$$\varepsilon(kT) = \mathrm{sign}\left[\left(|y_k|^2 - |\hat{a}_k|^2\right)\right] \cdot y_k \qquad (9)$$

It is easily understood that this expression is, from the hardware view point, easily implementable since the error calculation needs only the comparison between the square moduli of the datum coming out from the equalizer (which is then the input to the threshold decision device) and the decided data. On the contrary, should one decide to adopt the MMSE function (3), the expression (7) would remain valid but Equation (9) would become:

$$\varepsilon(kT) = y_k - \hat{a}_k \qquad (10)$$

The increase in hardware complexity of (9) as compared with (10) can be considered of modest extent.

Consider now the case where the circuits for the carrier recovery are placed downstream of the equalizer, and therefore that the signal to be equalized is demodulated in a non-coherent way: a possible basis diagram is shown in Fig. 2 by way of a non limiting example. The signal $y(kT)$ at the output of the equalizer is rotated by an amount $\varphi_k$ (by multiplying the signal $y(kT)$ by a complex exponential $e^{-j\varphi_k}$), $\varphi_k$ being the phase estimated by a PLL. The signal $z(kT)$ at this point is the input signal of the decision device which outputs the estimated data $a_k$.

The updating equation of the equalizer taps according to the function which is the subject of the invention does not change notwithstanding the presence of the complex multiplier, since, as said, it is independent of a phase rotation and hence $|y_k| = |z_k|$ : thus equations (7) and (8) are still valid.

To appreciate once more the advantages of the invention, the equation for updating the taps of the equalizer according to the MMSE function (3), on the contrary, would change: equation (7) remains valid, but this time equation (10) becomes:

$$\varepsilon(kT) = (z_k - \hat{a}_k) \cdot e^{+j\varphi_k} \qquad (11)$$

It is hence observed how in this circumstance it is necessary to perform a burdensome operation from the hardware viewpoint (a multiplication by a complex exponential); one of the advantages of the present invention, therefore, consists just in this saving. It is to be further noted that, should equation (11) be used to avoid a misconditioning, the equalizer would have to be phase locked in order to avoid interactions between the equalizer tap updating algorithms and the carrier phase recovery algorithms.

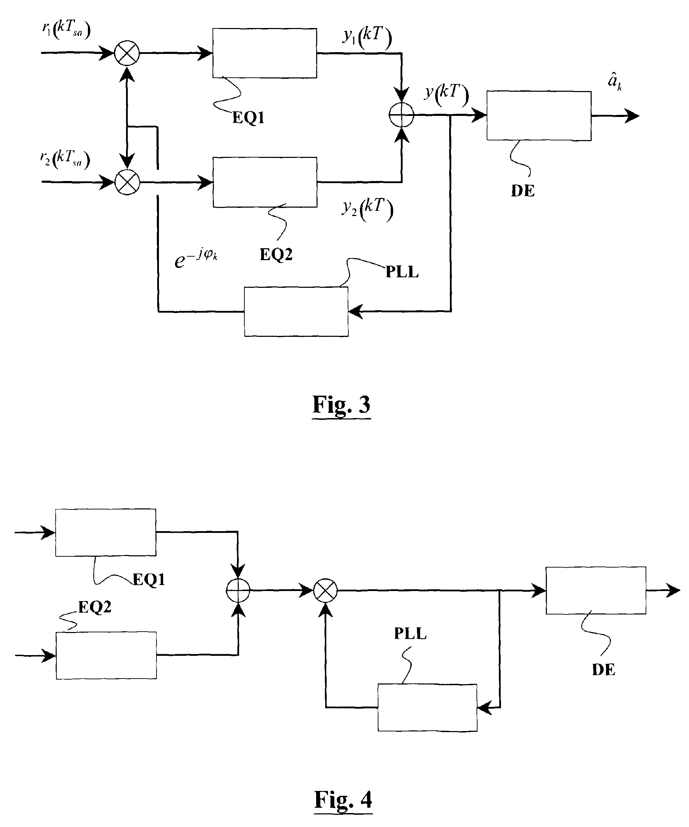

What has been seen heretofore can easily be extended to the case of a receiver with two or more space diversity signals. It is known that in this case the downconversion must occur in a synchronous manner. The carrier recovery may however be based on an error signal only, i.e. the one picked up downstream of the sum of the two or more adaptive equalizers (see Fig. 3). Consider, only for simplicity, hence by way of a non limiting example, the case of a receiver with two space diversity signals.

With reference to Figs. 3 and 4, the two signals at the input of the equalizers (EQ1, EQ2) can be characterized by means of an absolute phase $\varphi$ and a relative phase $\Delta\varphi$: we can thus identify the signal on the path 1 (that of EQ1) with a phase $\varphi$ and the one on the path 2 (that of EQ2) with a phase $\varphi + \Delta\varphi$. In order to realize the combination it is then necessary that, at the input of the node, the value of $\Delta\varphi$ be zero; the absolute phase $\varphi$ will be recovered by a coherent demodulation placed upstream (Fig. 3) or downstream (Fig. 4) of the adaptive equalizer. It is then necessary for the algorithm for updating the taps of the equalizers to be sensitive to the relative phase $\Delta\varphi$ only, but insensitive to the absolute phase, to prevent the pair of equalizers from being overparameterized and interfering with the carrier recovery: these requirements are satisfied by the algorithm which is the subject matter of the present invention as can be seen from the cost function (4).

With reference to Fig. 3, let

$c_1^T = [c_1(-N_1),...,c_1(N_2)]$ be the equalizer taps on path 1
$c_2^T = [c_2(-N_1),...,c_2(N_2)]$ be the equalizer taps on path 2
$y(kT) = y_1(kT) + y_2(kT)$ the signal coming out from the adder node
$r_1(kT_{sa}) = r_1(t = kT_{sa})$ the $k$-th sample of the signal at the input of the equalizer on path 1
$r_2(kT_{sa}) = r_2(t = kT_{sa})$ the $k$-th signal sample of the signal at the input of the equalizer on path 2

The equation for updating the taps of the two equalizers thus becomes:

$$c_{1\,i}((k+1)\cdot T) = c_i(kT) - \gamma\cdot\varepsilon(kT)\cdot r_1^*(kT - iT_{sa}) \qquad \text{with } i \in [-N_1, N_2] \qquad (12)$$

$$c_{2\,i}((k+1)\cdot T) = c_i(kT) - \gamma\cdot\varepsilon(kT)\cdot r_2^*(kT - iT_{sa}) \qquad \text{with } i \in [-N_1, N_2] \qquad (13)$$

with

$$\varepsilon(kT) = \text{sign}\left[\left(|y_k|^p - |\hat{a}_k|^p\right)^q\right]\cdot\left(|y_k|^p - |\hat{a}_k|^p\right)^{q-1}\cdot|y_k|^{p-2}\cdot y_k \qquad (14)$$

Similarly to what already said for the simple equalizer case, also in the case of space diversity receiver it can be shown that equation for updating the taps does not change by changing the point at which the coherent demodulation is carried out: i.e., with reference to the diagrams of Fig. 3 and Fig. 4, the error signal $\varepsilon(kT)$ used in (12) and in (13) remains the same.

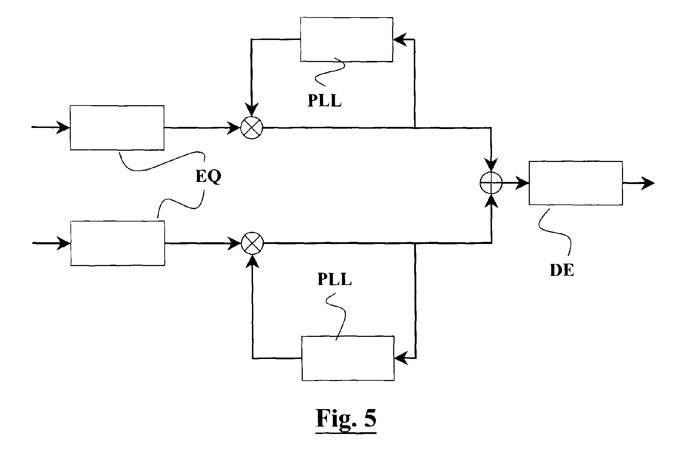

Yet, assuming now one wishes to update the coefficients of the two equalizers by using the MMSE cost function (3), the latter sensitive to the signal phase (and therefore both to an absolute phase and to a relative one), a possible solution for the realization of a space diversity signal combiner is the one illustrated in Fig. 5, the two equalizers being phase locked in order to avoid interactions between the carrier recovery algorithms and the equalizer tap updating algorithms. It should be noted, in fact, that the diagrams of Fig. 3 and Fig. 4 in this case are not proper since, should the equalizers be locked in phase, the relative phase could not be recovered whereas should they be not phase-locked, they could recover also the absolute phase, thus interacting and interferring with the circuits devoted to the carrier recovery.

With reference to Fig. 5, equations (12) and (13) become:

$$c_{1\,i}((k+1)\cdot T) = c_i(kT) - \gamma\cdot\varepsilon_1(kT)\cdot r_1^*(kT - iT_{sa}) \qquad \text{with } i \in [-N_1, N_2] \qquad (15)$$

$$c_{2i}((k + 1)\cdot T) = c_i(kT) - \gamma \cdot \varepsilon_2(kT)\cdot r_2^* (kT - iT_{sa}) \qquad \text{with } i \in [- N_1, N_2] \qquad (16)$$

where

$$\varepsilon_1(kT) = (y_k - \hat{a}_k)\cdot e^{+j\varphi1_k} \qquad (17)$$

$$\varepsilon_2(kT) = (y_k - \hat{a}_k)\cdot e^{+j\varphi2_k} \qquad (18)$$

It is seen how in this case it is even necessary to double the carrier recovery circuit (PLL) and perform two multiplications by complex exponentials whereas in the arrangements of Fig. 3 and Fig. 4, where the taps of the equalizers are adapted according to the function (4), subject matter of the present invention, this is no longer necessary (equation 14). Moreover, by utilizing the function (4) there is no need to phase-lock the two equalizers.

Although the present invention has been described above in detail, several modifications or variants are possible, since its scope is defined by the appended claims only.

## Claims

1. Method for the adaptive equalization in data transmission systems through adaptive equalization means, said method being characterized by operating independently of the signal phase at the input of said adaptive equalization means and dependently on decided data.

2. Method according to claim 1, wherein said adaptive equalization means comprise a FIR filter whose coefficients change with time according to a determined cost function (J), charactererized in that said cost function (J), in turn, depends on a difference between the modulus of the signal (y(kT)) at the output of said adaptive equalization means and the modulus of the datum ($\hat{a}_k$) estimated by decision means, both moduli being raised to a first power (p) whose value is a non-zero-integer.

3. Method according to claim 2, characterized in that said cost function (J) depends on the modulus of said difference between the moduli of the signal (y(kt)) at the output of the adaptive equalization means and the modulus of the estimated datum ($\hat{a}_k$), both being raised to the first power (p), the modules of the difference being in turn raised to a second power (q) whose value is a non-zero integer.

4. Method according to claim 3, characterized in that said cost function is given by

$$J = E\left\{ \left| \left| y(kT) \right|^p - \left| \hat{a}_k \right|^p \right|^q \right\} \qquad (4)$$

where $E\{\cdot\}$ denotes the averaging operation with respect to the symbols.

5. Method according to claim 4, characterized in that the first and second powers ( p,q ) have values equal to 2 and 1 respectively.

6. Method according to any of the preceding claims, charactererized in that said adaptive equalization means comprise two or more equalizers (EQ1, EQ2) for the corresponding combination of two or more space diversity signals, said signals being modulated with the same carrier and demodulated in a coherent manner at the input of said two or more equalizers (EQ1, EQ2).

7. Method according to any of claims 1 to 5, charactererized in that said adaptive equalization means comprise two or more equalizers (EQ1, EQ2) for the corrresponding combination of two or more space diversity signals, said signals being down-converted in a synchronous manner and coherently demodulated at the output of said equalizers.

8. Equalizer for the adaptive equalization in data transmission systems, said equalizer being characterized by operating independently of the signal phase at the input thereof and dependently on decided data.

9. Equalizer according to claim 8, characterized in that it comprises a FIR filter whose coefficients change with time according to a cost function (J), said cost function (J) in turn being dependent on a difference between the modulus of the signal ($y(kT)$) at the output of the equalizer and the modulus of the datum ($\hat{a}_k$) estimated by decision means, both moduli being raised to a first power ($p$) whose value is a non-zero integer.

10. Equalizer according to claim 9, characterized in that said cost function (J) depends on the module of said difference between the moduli of the signal ($y(kT)$) at the output of the adaptive equalization means and at the modulus of the estimated datum ($\hat{a}_k$), both being raised to the first power ($p$), the modulus of the difference, in turn, being raised to a second power ($q$) whose value is a non-zero integer.

11. Equalizer according to any of claims 9 to 10, characterized in that said cost function is given by

$$J = E\left\{ \left| \left| y(kT) \right|^p - \left| \hat{a}_k \right|^p \right|^q \right\} \qquad (4)$$

where $E\{\cdot\}$ denotes the averaging operation with respect to the symbols.

12. Equalizer according to claim 11, characterized in that the first and second powers ($p,q$) have values equal to 2 and 1 respectively.

13. Equalizer according to any of claims 8 to 12, characterized by comprising two or more equalizers (EQ1, EQ2) for the corresponding combination of two or more space diversity signals, said signals being modulated with the same carrier and demodulated in a coherent manner at the input of said two or more equalizers (EQ1, EQ2).

14. Equalizer according to any of claims 8 to 12, characterized by comprising two or more equalizers (EQ1, EQ2) for the corresponding combination of two or more space diversity signals, said signals being down-converted in a synchronous manner and coherently demodulated at the output of said equalizers.

15. Receiver for use in a data transmission system, characterized by comprising one or more equalizers according to any of claims 8 to 14.

$r(kT_{sa})$

$T_{sa}$ $T_{sa}$ — — — $T_{sa}$

$C_{-N_1}$ $C_{-N_1+1}$ • • • $C_{N_2-1}$ $c_{N_2}$

$\sum$

$y(kT)$

**Fig. 1**

$e^{+j\varphi_k}$

EC

$r(kT_{sa})$ $y(kT)$ $z(kT)$

DE

EQ

$e^{-j\varphi_k}$

PLL

**Fig. 2**

$r_1(kT_{sa})$

$y_1(kT)$

$\hat{a}_k$

**EQ1**

$y(kT)$

$r_2(kT_{sa})$

$y_2(kT)$

**DE**

$e^{-j\varphi_k}$

**EQ2**

**PLL**

**Fig. 3**

**EQ1**

**EQ2**

**PLL**

**DE**

**Fig. 4**

**Fig. 5**